# EUROPEAN PATENT APPLICATION

(11) **EP 2 790 398 A1**
(43) Date of publication of application: **15.10.2014**
(21) Application number: 13838065.4
(22) Date of filing: 18.12.2013
(51) Int. Cl.: H04N 5/235, G03B 7/08, G03B 15/00, H04N 5/225, H04N 5/232

(54) **IMAGE RECOGNITION DEVICE**

(30) Priority: 13.02.2013 JP 2013025096
(71) Applicant: NEC Corporation, Tokyo 108-8001 (JP)
(72) Inventor: YAMAMOTO, Setsuo, Tokyo 108-8001 (JP)
(74) Representative: Vossius & Partner
(86) International application number: PCT/JP2013/007423
(87) International publication number: WO 2014/125544

(57) **Abstract**

The image recognition device includes an imaging means for generating an image of a subject, a local area storage means for storing information relating to a local area set in an imaging screen of the imaging means, and an image data processing means for performing exposure control of the imaging means and image recognition processing, based on the image within the local area specified by the information stored in the local area storage means, of the image generated by the imaging means.

## Description

### TECHNICAL FIELD

The present invention relates to an image recognition device, an image recognition method, and a program, for detecting an intruding object based on images captured by an imaging means.

### BACKGROUND ART

Image recognition devices which detect the behavior of persons, cars, animals, and the like, based on images captured by an imaging means such as a video camera, have been developed. In an image recognition device of this type, a local area is set in the imaging screen, and the image within the local area is analyzed in general, rather than analyzing the entire imaging screen (image of the subject monitored by a finder or a display) of the imaging means.

For example, first related art of the present invention proposes detecting an unidentified object crossing a white line indicating a restricted area from the top to the bottom, by performing image recognition processing (see Patent Document 1, for example). In more detail, in the first related art, a range in which an intruding object may appear including the white line, is captured by an imaging means, an area near the edge of the upper side of the white line within the imaging screen is set as a local area, and the image of the local area is analyzed to thereby detect that the while line is hidden by an intruding object. Further, in the first related art, a diaphragm adjusting mechanism is provided so as to adjust changes in the brightness of the image due to time, weather, and the like.

Meanwhile, second related art of the present invention proposes performing exposure control of the overall subject image so as to make an area designated by a user have appropriate brightness (see Patent Document 2, for example). In more detail, in the second related art, a user sets an area, where it is desired to suppress overexposure in the subject image, to be a target area by operating a touch panel to surround a given area thereon, for example, Then, photometry is performed within the target area to thereby determine appropriate exposure.

Third related art of the present invention proposes, in a night vision system and the like for securing a night visual range, controlling exposure of a camera based on the brightness of an image of an area irradiated by a headlight in the footage of the camera capturing the front of the vehicle (see Patent Document 3, for example). In more detail, the system includes an exposure control means for setting an exposure control use area to be used when controlling exposure of a camera, with respect to an image captured by the camera which is mounted on a vehicle and captures an image ahead of the vehicle, and performing exposure control of the camera based on the brightness of the image within the exposure control use area, and an irradiation optical axis deflection means for changing the irradiation optical axis of the headlight of the vehicle in vertical and lateral directions according to a traveling state of the vehicle. The exposure control means changes at least one of the setting position and the size of the exposure control use area, based on the deflection angle of the irradiation optical axis deflected by the irradiation optical axis deflection means.

Fourth related art of the present invention proposes warning of states where erroneous detection and omission of detection tend to occur, in an image recognition device which detects an intruding object by analyzing images captured by an imaging means (see Patent Document 4, for example). In more detail, in the fourth related art, an area in which shielding by an intruding object never occurs and contrast can be measured easily due to a large number of edges, within an imaging screen, is set as an image quality measurement area. Degradation of the image quality of the image quality measurement area is monitored regularly, and when degradation occurs, warning is given.

Patent Document 1: JP 5-300516 A
Patent Document 2: JP 2011-129993 A
Patent Document 3: JP 4556777 B
Patent Document 4: JP 2001-160146 A

### SUMMARY

In an image recognition device in which a local area is set within the imaging screen and the image within the local area is analyzed, the quality of the image within the local area largely affects the image recognition result. In the first related art, changes in the brightness of the image due to time, weather, and the like is adjusted by a diaphragm adjusting mechanism provided to the imaging means. However, even though the average brightness of the entire imaging screen is optimized, the brightness inside the local area is not necessarily optimized. As described in the second and third related art, while imaging means having a function of controlling exposure so as to optimize the brightness of an area designated by a user or an area irradiated by a headlight of a vehicle have been proposed, in a configuration in which an area for exposure control designated by a user or an area irradiated by a headlight is set without any reference to the local area for performing image recognition processing, the image quality in the local area for performing image recognition processing is not optimized.

An object of the present invention is to provide an image recognition device which solves the above-described problem, that is, a problem that the image quality of an area for performing image recognition processing is not optimized in a configuration in which an area defined in an imaging screen, to be used for controlling exposure of an imaging means, is set without any reference to an area defined in the imaging screen for performing image recognition processing.

An image recognition device, according to a first aspect of the present invention, includes
an imaging means for generating an image of a subject;
a local area storage means for storing information relating to a local area set in an imaging screen of the imaging means; and
an image data processing means for performing exposure control of the imaging means and image recognition processing, based on the image within the local area specified by the information stored in the local area storage means, of the image generated by the imaging means.

Further, an image recognition method, according to a second aspect of the present invention, is an image recognition method implemented by an image recognition device including an imaging means, a local area storage means for storing information relating to a local area set in an imaging screen of the imaging means, and an image data processing means. The method includes
by the imaging means, generating an image of a subject, and
by the image data processing means, performing exposure control of the imaging means and image recognition processing, based on the image within the local area specified by the information stored in the local area storage means, of the image generated by the imaging means.

Further, a program, according to a third aspect of the present invention, causes a computer to function as, the computer being connected with an imaging means for generating an image of a subject and including a memory for storing information relating to a local area set in an imaging screen of the imaging means,
an image data processing means for performing exposure control of the imaging means and image recognition processing, based on the image within the local area specified by the information stored in the memory, of the image generated by the imaging means.

As the present invention has the above-described configuration, the present invention is able to control exposure of an imaging means so as to optimize the image quality of an area used for performing image recognition processing.

### BRIEF DESCRIPTION OF DRAWINGS

Fig. 1 is a block diagram showing a first exemplary embodiment of the present invention.
Fig. 2 is a block diagram showing a second exemplary embodiment of the present invention.
Fig. 3 is a diagram showing an exemplary configuration of a local area memory according to the second exemplary embodiment of the present invention.
Fig. 4 is a block diagram showing a management device according to the second exemplary embodiment of the present invention.
Fig. 5 is a flowchart showing an exemplary operation of setting a local area according to the second exemplary embodiment of the present invention.
Fig. 6 is a flowchart showing an exemplary operation of exposure control and detection of an intruding object detection to the second exemplary embodiment of the present invention.
Fig. 7 is a block diagram showing a third exemplary embodiment of the present invention.
Fig. 8 is a block diagram showing a fourth exemplary embodiment of the present invention.
Fig. 9 is an illustration for explaining grouping according to the fourth exemplary embodiment of the present invention.
Fig. 10 is a flowchart showing an exemplary operation of exposure control and detection of an intruding object according to the fourth exemplary embodiment of the present invention.

### EXEMPLARY EMBODIMENTS

Next, exemplary embodiments of the present invention will be described in detail with reference to the drawings.

### FIRST EXEMPLARY EMBODIMENT

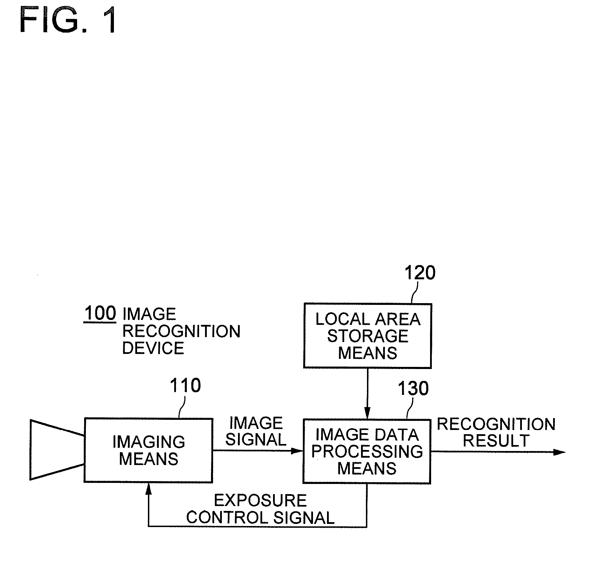

Referring to Fig. 1, an image recognition device 100 according to a first exemplary embodiment of the present invention includes an imaging means 110, a local area storage means 120, and an image data processing means 130.

The imaging means 110 has a function of generating an image of a subject.

The local area storage means 120 has a function of storing information related to a local area set in an imaging screen of the imaging means 110.

The image data processing means 130 has a function of performing exposure control of the imaging means 110 and image recognition processing, based on the image within the local area specified by the information stored in the local area storage means 120, of the image generated by the imaging means 110.

Next, operation of the image recognition device 100 according to the present embodiment will be described.

Before starting image recognition processing such as detection of an intruding object by the image recognition device 100, information specifying the local area is registered in the local area storage means 120. After the information relating to the local area is stored in the local area storage means 120, the image recognition device 100 continuously performs the following operation.

First, the imaging means 110 of the image recognition device 100 captures an image of a subject, and outputs it to the image data processing means 130. Then, the image data processing means 130 extracts the image within the local area specified by the information stored in the local area storage means 120, from the image generated by the image data processing means 130. Then, the image data processing means 130 generates an exposure control signal based on the extracted image within the local area, and controls exposure of the imaging means 110. Further, the image data processing means 130 performs image recognition processing for determining presence or absence of an intruding object, for example, based on the extracted image within the local area. The image recognition device 100 repeatedly performs the operation described above at predetermined cycles.

As described above, according to the present embodiment, it is possible to control exposure of the imaging means 110 in such a manner as to optimize the image quality of an area used for performing the image recognition processing. This is because the image data processing means 130 performs exposure control of the imaging means 110 and image recognition processing, based on the image within the local area specified by the information stored in the local area storage means 120, of the image generated by the imaging means 110.

### SECOND EXEMPLARY EMBODIMENT

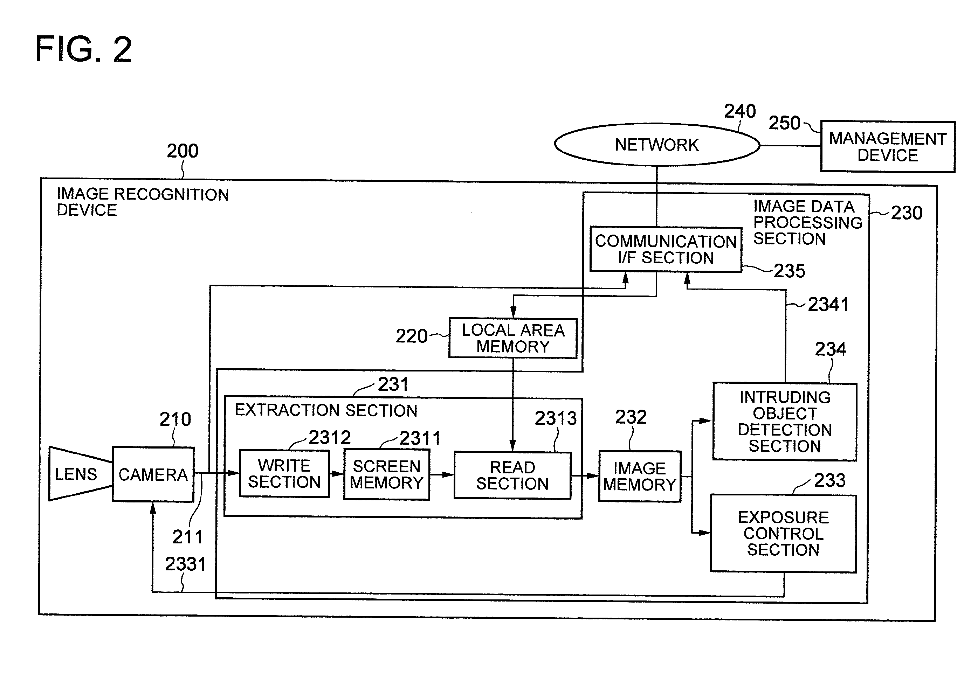

Referring to Fig. 2, an image recognition device 200 according to a second exemplary embodiment of the present invention is connected with a management device 250 via a network 240. The image recognition device 200 includes a camera 210, a local area memory 220, and an image data processing section 230.

The camera 210 is formed of a typical video camera, an infrared camera, a highly sensitive camera, or the like. The camera 210 has a function of capturing an image of a subject via a lens, and for each frame, amplifying a captured image 211, converting it to a digital signal, and transmitting it to the image data processing section 230. Further, in the camera 210, exposure is controlled by an exposure control signal 2331 given by the image data processing section 230.

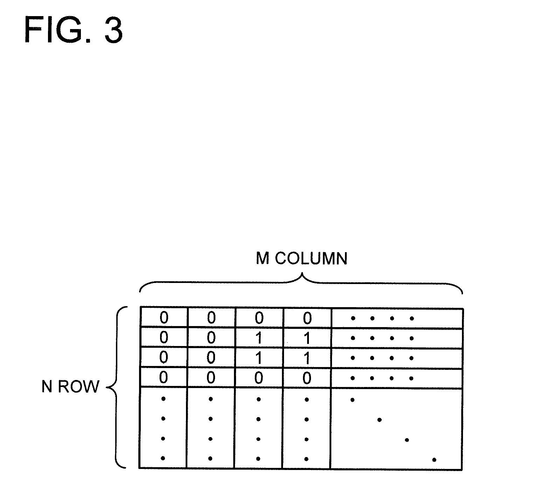

The local area memory 220 is formed of a RAM or the like, and stores information relating to the local area. Fig. 3 shows an exemplary configuration of the local area memory 220. The local area memory 220 of this example is configured of a total of n*m pieces of memory cells in n rows and m columns. Each of the memory cells corresponds to each divided area on a one-to-one basis in the case of dividing the imaging screen of the camera 210 into n rows and m columns, and stores a logical value 1 or a logical value 0 therein. A memory cell storing a logical value 1 shows that the corresponding divided area in the imaging screen is part of the local area, and a logical value 0 shows that the divided area is out of the local area. Values of n and m may take any number if it is 2 or larger. As for the local area, any shape and number may be taken.

The image data processing section 230 includes an extraction section 231, an image memory 232, an exposure control section 233, an intruding object detection section 234, and a communication interface (communication I/F) section 235.

The extraction section 231 has a function of extracting, from the image 211 received from the camera 210, the image within the local area specified by the information stored in the local area memory 220. For example, as shown in Fig. 2, the extraction section 231 includes a screen memory 2311 having the capacity for one screen of the camera 210, a write section 2312 which writes the image 211 received from the camera 210 into the screen memory 2311, and a read section 2313 which reads the image within the local area from the screen memory 2311 and writes it into the image memory 232. When reading from the screen memory 2311, the read section 2313 reads image data only from the areas, of the screen memory 2311, corresponding to the divided areas in which a logical value 1 is stored in the local area memory 220.

The image memory 232 is formed of a RAM or the like which stores the image of the local area extracted by the extraction section 231.

The exposure control section 233 has a function of reading the image within the local area from the image memory 232, generating an exposure control signal 2331 for controlling exposure of the camera 210 based on the brightness of the readout image, and outputting it to the camera 210. Specifically, the exposure control section 233 first averages the pixel values in the local area to thereby calculate average luminance of the local area. Then, if the average luminance is within the range of a certain luminance level, the exposure control section 233 saves the exposure control amount at the current exposure control amount, while if the average luminance is out of the certain luminance level, the exposure control section 233 calculates an exposure control amount for making the average luminance fall within the range. Then, the exposure control section 233 transmits the exposure control signal 2331 corresponding to the calculated exposure control amount to the camera 210. The exposure control signal 2331 may be a signal for adjusting one of, two of, three of, or all of the stop adjustment amount of the lens of the camera 210, shutter speed, frame rate, and a gain of the amplifying section for amplifying video signals.

The intruding object detection section 234 has a function of reading the image within the local area from the image memory 232, and performing image recognition processing for detecting presence or absence of an intruding object with respect to the readout image. Any method can be used for detecting an intruding object by analyzing the image. For example, a method of calculating, for each pixel, a difference value between a plurality of continuous images, and detecting an area having a larger difference value as an intruding object, may be used. Alternatively, a method of detecting presence or absence of an intruding object by detecting a loss of an image feature in the local area, may be used, as described in Patent Document 1. The intruding object detection section 234 also has a function of outputting a detection result 2341 of presence or absence of an intruding object. The detection result 2341 may include information regarding the detected position of the intruding object and the like.

The communication I/F section 235 has a function of transmitting information relating to the local area received from the management device 250 over the network 240, to the local area memory 220, and a function of transmitting the image 211 generated by the camera 210 and the detection result 2341 of the intruding object detection section 234, to the management device 250 over the network 240.

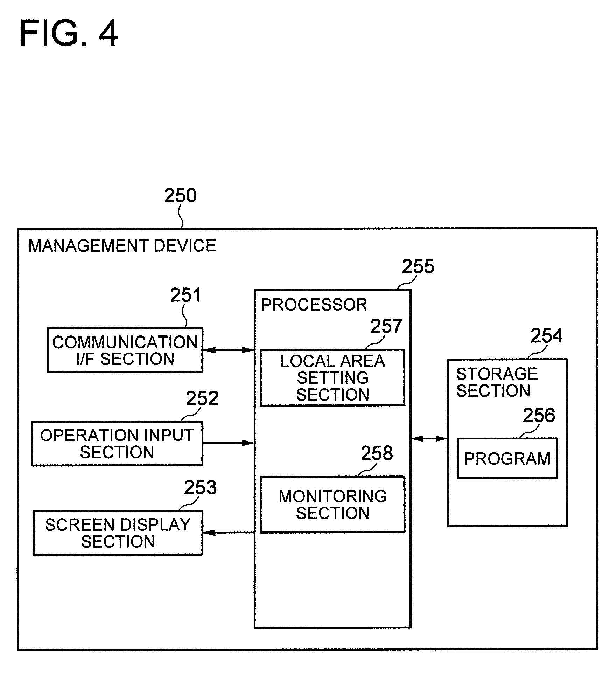

The management device 250 has a function of managing the image recognition device 200. Fig. 4 is a block diagram showing an example of the management device 250. The management device 250 of this example includes a communication I/F section 241, an operation input section 252, a screen display section 253, a storage section 254, and a processor 255.

The communication I/F section 251 has a function of performing data communications with various types of devices such as the image recognition device 200 connected over the network 240. The operation input section 252 is configured of operation input devices such as a keyboard and a mouse, and has a function of detecting operations by an operator and outputting them to the processor 255. The screen display section 253 is configured of a screen display device such as a LCD (Liquid Crystal Display) or a PDP (Plasma Display Panel), and has a function of displaying, on the screen, various types of information such as a detection result in response to instructions from the processor 255.

The storage section 254 is configured of a storage device such as a hard disk or a memory, and has a function of storing a program 256 necessary for the processor 255. The program 256 is a program for realizing various types of processing sections by being read and executed by the processor 255, and is read, in advance, from an external device (not shown) or a storage medium (not shown) via a data input/output function such as the communication I/F section 251 and stored in the storage section 254.

The processor 255 includes a microprocessor such as an MPU and peripheral circuitry thereof, and has a function of reading and executing the program 256 from the storage section 254 and allowing the hardware and the program to cooperate with each other to thereby realize various types of processing sections. Main processing sections realized by the processor 255 include a local area setting section 257 and a monitoring section 258.

The local area setting section 257 has a function of displaying an image captured by the camera 210, received from the image recognition device 200 via the communication I/F section 251, on the screen display section 253, a function of inputting, from the operation input section 252, designation of an area set as a local area on the displayed image, and a function of transmitting information specifying the input local area to the image recognition device 200 via the communication I/F section 251.

Further, the monitoring section 258 has a function of receiving a detection result of an intruding object from the image recognition device 200 via the communication I/F section 251, displaying the detection result on the screen display section 253, and transmitting it to the outside via the communication I/F section 251.

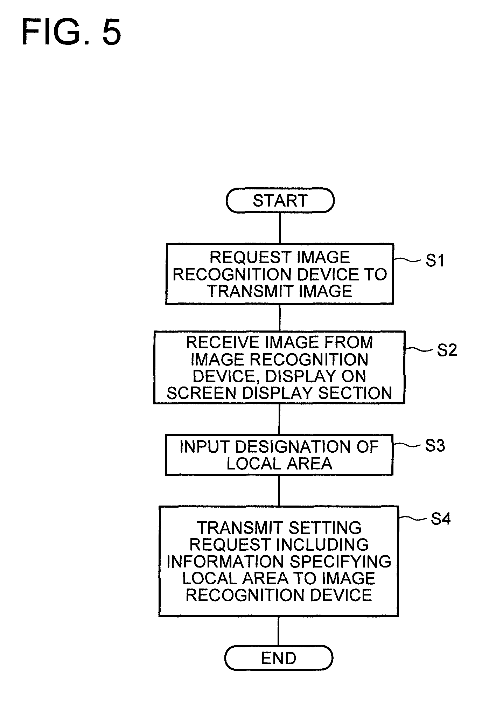

Next, operation of the present embodiment will be described. First, an operation of setting a local area will be described with reference to the flowchart of Fig. 5.

When an operator of the management device 250 instructs to start setting of a local area from the operation input section 252, the local area setting section 257 starts execution of the processing shown in Fig. 5. First, the local area setting section 257 transmits a communication message to request transmission of an image captured by the camera 210, to the image recognition device 200 via the communication I/F section 251 (S1). Upon receipt of the request, the communication I/F section 235 of the image recognition device 200 transmits an image 211 output from the camera 210, to the management device 250 over the network 240. The local area setting section 257 of the management device 250 receives the image from the image recognition device 200, and displays it on the screen display section 253 (S2).

Next, the local area setting section 257 inputs designation of an area to be set as a local area, from the operation input section 252 (S3). As for a designation inputting method, any method can be used. For example, the local area setting section 257 may divide the image of the image recognition device 200 displayed on the screen display section 253 in a matrix of n rows and m columns, and when each of the divided areas is double-clicked, for example, the local area setting section 257 may recognize the divided area as being designated as part of the local area, or the local area setting section 257 may recognize the inside of a closed curve drawn on the display screen as a local area.

Next, when detecting completion of the local area designation operation, the local area setting section 257 transmits information specifying the designated local area to the image recognition device 200 via the communication I/F section 251, receives a reply thereto, and ends the processing shown in Fig. 5. Upon receipt of the information, the communication I/F section 235 of the image recognition device 200 transfers it to the local area memory 220. The local area memory 220 writes the information specifying the local area into the own memory, and transmits a setting completion reply to the management device 250 via the communication I/F section 235.

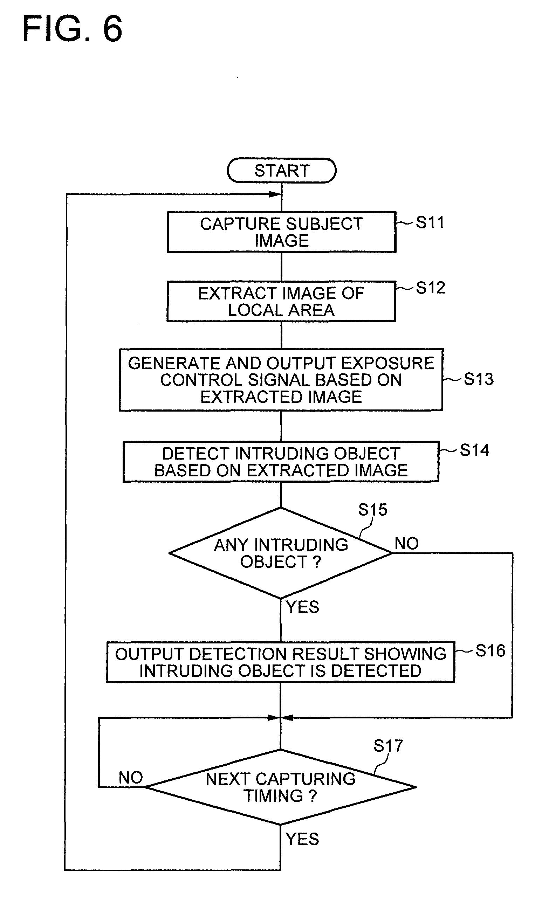

Next, operation of exposure control and detection of an intruding object in the image recognition device 200 will be described with reference to the flowchart of Fig. 6.

The camera 210 of the image recognition device 200 captures an image of the subject, and outputs the captured image 211 (S11). The extraction section 231 extracts, from the image 211, the image within the local area specified by the information stored in the local area memory 220, and stores it in the image memory 232 (S12). The exposure control section 233 reads the image within the local area from the image memory 232, generates the exposure control signal 2331 based on the image, and controls exposure of the camera 210 (S13). The intruding object detection section 234 reads the image within the local area from the image memory 232, analyzes the image, and detects presence or absence of an intruding object (S14). Then, when detecting an intruding object (YES at S15), the intruding object detection section 234 transmits a detection result 2341 showing that the intruding object is detected, to the management device 250 via the communication I/F section 235 (S16). If an intruding object is not detected, the processing of step S16 is skipped.

The camera 210 monitors coming of the next imaging timing (S 17), and when the next imaging timing comes, returns to the processing of step S11. Then, the same processing as that described above is repeated.

As described above, according to the present embodiment, it is possible to control exposure of the camera 210 in such a manner as to optimize the image quality of the area for performing detection of an intruding object. This is because exposure control of the camera 210 and detection of an intruding object are performed based on the image within the local area, specified by the information stored in the local area memory 220, of the image generated by the camera 210.

### THIRD EXEMPLARY EMBODIMENT

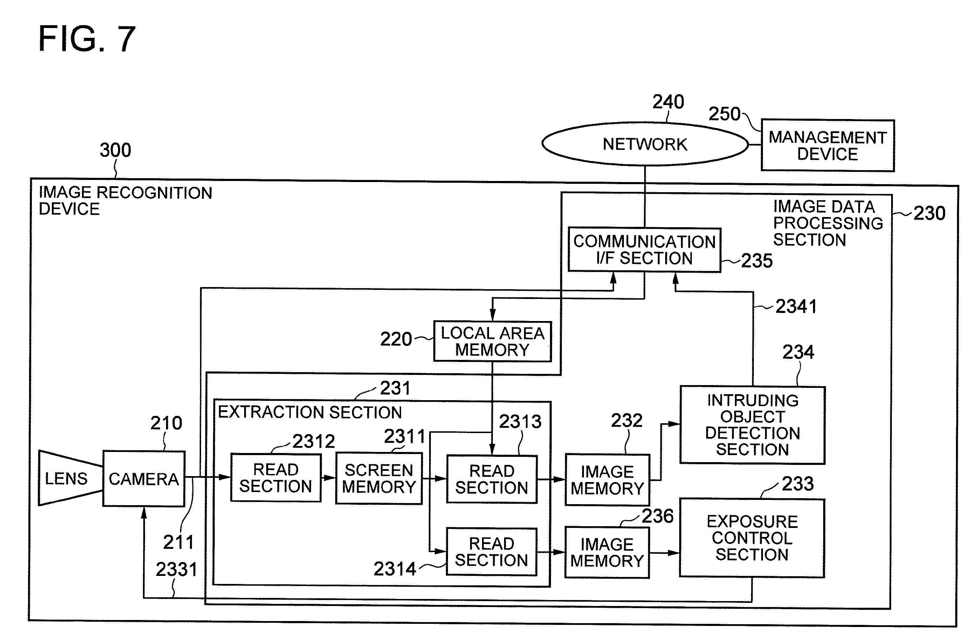

Referring to Fig. 7, an image recognition device 300 according to a third exemplary embodiment of the present invention differs from the image recognition device 200 according to the second exemplary embodiment of the present invention shown in Fig. 2 in that the extraction section 231 includes two read sections 2313 and 2314 and two image memories 232 and 236.

The read section 2313, which is the same as the read section 2313 of the second exemplary embodiment, extracts an image within a local area specified by information stored in the local area memory 220, from the image stored in the screen memory 2311, and writes it into the image memory 232. The intruding object detection section 234, which is the same as the intruding object detection section 234 of the second embodiment, reads the image from the image memory 232 and detects presence or absence of an intruding object.

On the other hand, the read section 2314 has a function of extracting an image within an area defined by expanding the local area specified by the information stored in the local area memory 220 by a certain amount or a certain ratio, from the image stored in the screen memory 2311, and writing it into the image memory 236. The exposure control section 233 controls exposure of the camera 210 based on the image stored in the image memory 236.

The configurations and operations other than those described above are the same as those of the second exemplary embodiment.

As described above, in the present embodiment, a wider area including the area for detecting an intruding object is used as an area for exposure control. Thereby, the present embodiment has an effect of reducing the tolerance in exposure control if the size and the width are too small for an area for exposure control.

### FOURTH EXEMPLARY EMBODIMENT

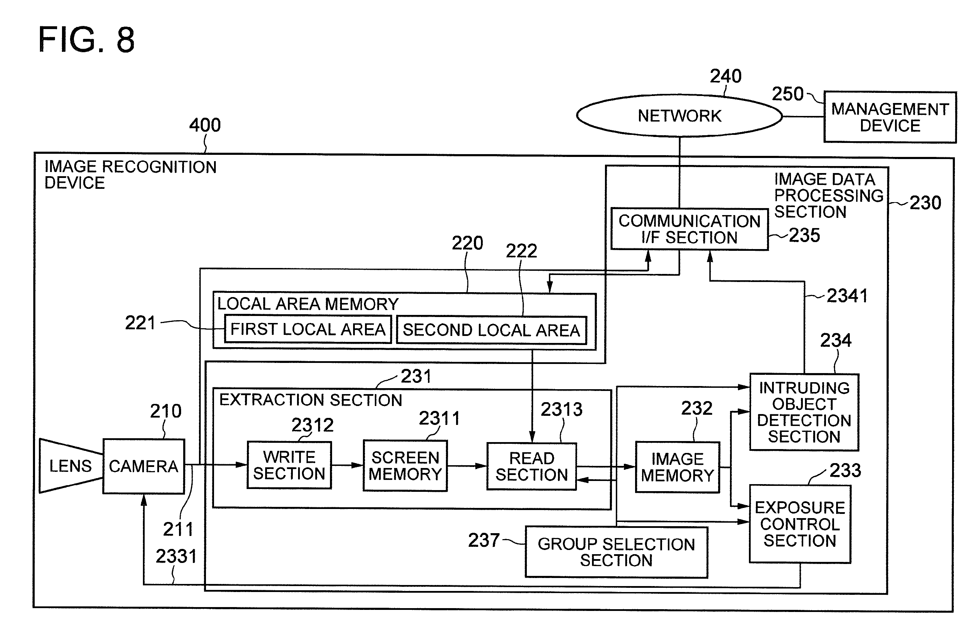

Referring to Fig. 8, an image recognition device 400 according to a fourth exemplary embodiment of the present invention differs from the image recognition device 200 according to the second exemplary embodiment of the present invention shown in Fig. 2 in that the local area memory 220 stores information 221 relating to a first local area and information 222 related to a second local area, and the image data processing section 230 includes a group selection section 237.

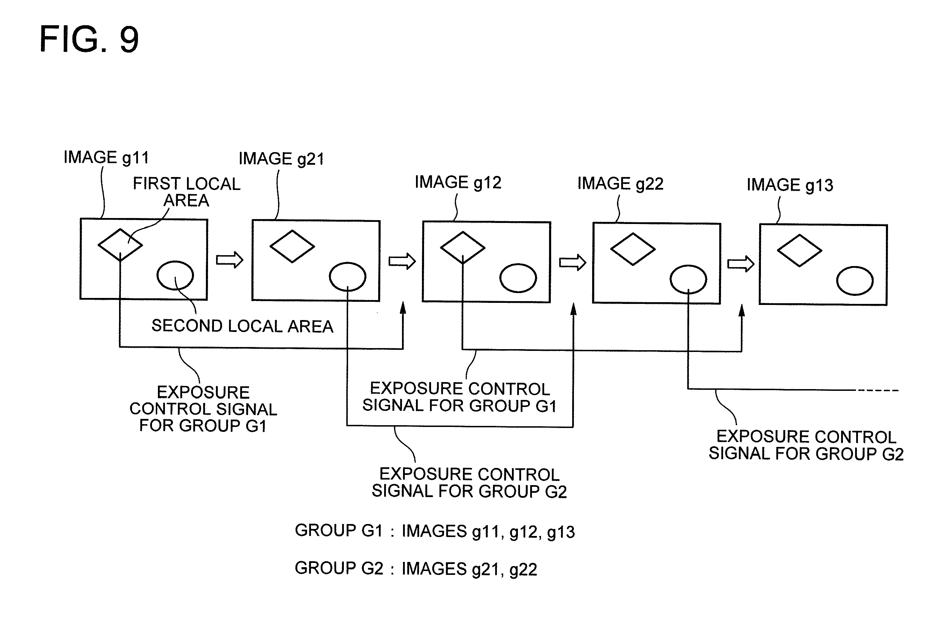

The group selection section 237 has a function of sequentially selecting a processing target group from a plurality of groups. Here, a group means each of the groups when a plurality of images generated by the camera 210 are divided into a plurality of groups corresponding to the respective local areas on a one-to-one basis in a time axis direction. A specific example thereof will be described with reference to Fig. 9.

In Fig. 9, images g11, g21, g12, g22, and g13 are images generated by the camera 210 aligned in a chronological order, in which the image g11 is the oldest image and the image g13 is the latest image. As such, from the camera 210, the image g11, the image 21, the image g12, the image g22, and the image g13 are output in this order. Further, a rhombic area in each image shows a first local area specified by the information 221 in the local area memory 220, and an elliptic area shows a second local area specified by the information 222. While two local areas are used in this example, the number of the local areas may be three or more. Further, a plurality of local areas may be apart from each other as in the example shown in Fig. 9, or may be adjacent to each other.

On an assumption that a group corresponding to the first local area is G1 and a group corresponding to the second local area is G2, in the grouping shown in Fig. 9, the images g11, g12, and g13 are classified in the group G1 and the images g21 and g22 are classified in the group G2. As such, in the example shown in Fig. 9, the images output from the camera 210 at the odd-number positions in the sequence are in the group G1, and the images at the even-number positions in the sequence are in the group G2. However, this grouping is shown as an example, and other grouping methods may be used. For example, it is also possible to use a method in which a total of n (n≥2) pieces of images continuously output from the camera 210 are in the group G1, a subsequent total of m (≥2) pieces of output images are in the group G2, and a subsequent total of n pieces of output images are again in the group G1.

The group selection section 237 outputs information of a selected group to the read section 2313, the intruding object detection section 234, and the exposure control section 233, as a control signal.

The read section 2313 reads, from the local area memory 220, the information 221 or 22 specifying the local area corresponding to the group shown by the control signal, and extracts the image within the local area specified by the readout information from the images stored in the screen memory 2311, and writes it into the image memory 232.

Further, the exposure control section 233 reads, from the image memory 232, the image within the local area corresponding to the group shown by the control signal, and based on the brightness of the readout image, generates and saves an exposure control signal for the group, and when an image of the group is captured next time by the camera 210, outputs the saved exposure control signal as the exposure control signal 2331 to the camera 210 to thereby control the exposure. This will be described below with reference to Fig. 9.

When the image g11 of the group G1 is generated by the camera 210 and the image within the first local area of the image g11 is extracted by the extraction section 231, the exposure control section 233 generates an exposure control signal for the group G1 based on the brightness of the image within the first local area of the image g11, and temporarily saves it therein.

Then, when the image g21 of the group G2 is generated by the camera 210 and the image within the second local area of the image g21 is extracted by the extraction section 231, the exposure control section 233 generates an exposure control for the group G2 based on the brightness of the image within the second local area of the image g21, and temporarily saves it therein.

Then, the exposure control section 233 controls the exposure of the camera 210 by the saved exposure control signal for the group G1 at timing immediately before capturing of the image g12 of the group G1 by the camera 210 so as to allow the image g12 to be captured by the camera 210 under this exposure control. Further, the exposure control section 233 controls the exposure of the camera 210 by the saved exposure control signal for the group G2 at timing immediately before capturing of the image g22 of the group G2 by the camera 210 so as to allow the image g22 of the group G2 to be captured by the camera 210 under this exposure control.

In this way, the exposure control section 233 performs exposure control of the camera 210 for each group independently.

On the other hand, the intruding object detection section 234 reads, from the image memory 232, the image within the local area corresponding to the group shown by the control signal, and performs detection of an intruding object based on the readout image. This will be described below with reference to Fig. 9.

When the image g11 of the group G1 is generated from the camera 210 and the image within the first local area of the image g11 is extracted by the extraction section 231, the intruding object detection section 234 performs detection of an intruding object based on the image within the first local area of the image g11. Then, when the image g21 of the group G2 is generated from the camera 210 and the image within the second local area of the image g21 is extracted by the extraction section 231, the intruding object detection section 234 performs detection of an intruding object based on the image within the second local area of the image g21. In this way, the intruding object detection section 234 performs detection of an intruding object for each group independently.

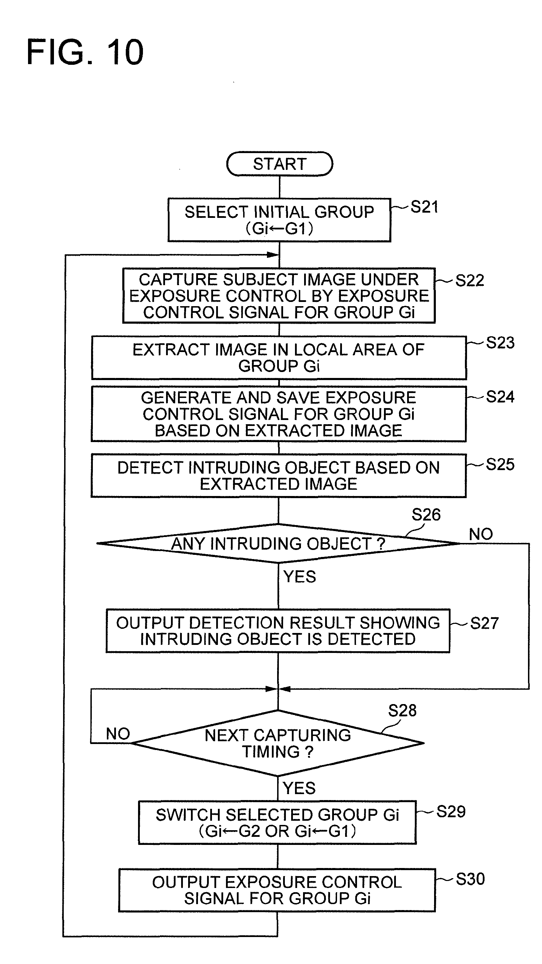

Hereinafter, operation of exposure control and detection of an intruding object by the image recognition device 400 will be described with reference to the flowchart of Fig. 10.

The group selection section 237 of the image recognition device 400 first selects the group G1 (S21), The camera 210 of the image recognition device 400 captures an image of the subject under the exposure control by the exposure control signal for the group G1, and outputs the captured image 211 (S22). The extraction section 231 extracts, from the image 211, the image within the first local area specified by the information 221 stored in the local area memory 220, and stores it in the image memory 232 (S23). The exposure control section 233 reads the image within the first local area from the image memory 232, and based on the image, generates and saves the exposure control signal 2331 for the group G1 to be used next time (S24). Further, the intruding object detection section 234 reads the image within the first local area from the image memory 232, analyzes the image, and detects presence or absence of an intruding object (S25). Then, when detecting an intruding object (YES at S26), the intruding object detection section 234 transmits the detection result 2341 showing that the intruding object is detected, to the management device 250 via the communication I/F section 235 (S27). If an intruding object is not detected, the processing of step S27 is skipped.

The group selection section 237 monitors coming of the next capturing timing (S28), and when the next capturing timing comes, switches the selected group from the current group G1 to the group G2 (S29). Further, the exposure control section 233 outputs the exposure control signal for the group G2 saved therein, to the camera 210 (S30). Then, returning to the processing of step S22, the camera 210 captures an image under the exposure control by the exposure control signal for the group G2, and generates a new image 211.

Then, the extraction section 231 extracts the image within the second local area specified by the information 222 stored in the local area memory 220 from the generated image 211, and stores it in the image memory 232 (S23). The exposure control section 233 reads the image within the second local area from the image memory 232, generates an exposure control signal 2331 for the group G2 based on the image, and saves it (S24). Further, the intruding object detection section 234 reads the image within the second local area from the image memory 232, analyzes the image, and detects presence or absence of an intruding object (S25). When detecting an intruding object (YES at S26), the intruding object detection section 234 transmits a detection result 2341 showing that the intruding object is detected, to the management device 250 via the communication I/F section 235 (S27). If an intruding object is not detected, processing of step S27 is skipped.

The group selection section 237 monitors coming of the next capturing timing again (S28), and when the next capturing timing comes, switches the selected group from the current group G2 to the group G1(S29). Then, the exposure control section 233 outputs the exposure control signal for the group G1 saved therein, to the camera 210 (S30). Then, returning to the processing of step S22, the camera 210 captures an image under the exposure control by the exposure control signal for the group G1, and generates a new image. After this step, the operation same as that described above is repeated alternately for the respective groups.

Configurations and operations other than those described above are the same as those of the second exemplary embodiment.

As described above, according to the present embodiment, it is possible to control exposure of the camera 210 in such a manner as to optimize the image quality of the area for performing detection of an intruding object. This is because exposure control of the camera 210 and detection of an intruding object are performed based on the image within the local area specified by the information stored in the local area memory 220, of the images generated by the camera 210.

Further, according to the present embodiment, the information 221 and the information 222 for a plurality of local areas are stored, the image data processing section 230 divides a plurality of images generated by the camera 210 into a plurality of groups which corresponds to the local areas on a one-to-one basis in a time axis direction, and exposure control of the camera 210 and detection of an intruding object are performed for each group independently, As such, it is possible to obtain a high-quality subject image for each of a plurality of local areas having different brightness, whereby the accuracy of detecting an intruding object can be improved.

### OTHER EXEMPLARY EMBODIMENTS

While the present invention has been described with the exemplary embodiments described above, the present invention is not limited to the above-described embodiments. The form and details of the present invention can be changed in various manners.

For example, while processing of extracting the image within a local area from the image captured by the imaging means is performed using a digital image, it may be performed using an analog image. Further, as description has been given mainly on an image recognition device in which an imaging means such as the camera 210 and an image data processing means for performing exposure control and image recognition processing are integrally provided, the present invention is also applicable to an image recognition device in which an imaging means and an image data processing means are implemented on different housings physically.

Further, if a video signal for being displayed on a display device and a video signal for exposure control are output separately from an imaging means such as the camera 210, it is possible to extract a video signal in a local area from the video signal for being displayed on the display device and extract a video signal in a local area from the video signal for exposure control, and use them as a local area image for image recognition processing and a local area image for exposure control, respectively.

Further, the image recognition processing performed in the present invention is not limited to detection of an intruding object. The image recognition processing may be monitoring of someone's behavior and the like, or monitoring of heating states of various devices and the like.

Further, the present invention is able to be realized by a computer including a processor such as an MPU and a memory for storing local area information and the like, and by a program executed by the processor, besides being realized by hardware. The program is provided by being stored in a computer-readable medium such as a semiconductor memory, a magnetic disk, or the like, is read by the computer when the computer is started, and controls operation of the computer to thereby realize the image data processing means 130 or 230, described above, on the computer.

The present invention is based upon and claims the benefit of priority from Japanese patent application No. 2013-025096, filed on February 13, 2013, the disclosure of which is incorporated herein in its entirety by reference.

### INDUSTRIAL APPLICABILITY

The present invention is applicable to overall systems for performing image recognition processing such as detection of an intruding object by analyzing images captured by a camera.

### DESCRIPTION OF REFERENCE NUMERALS

- 100: image recognition device
- 110: imaging means
- 120: local area storage means
- 130: image data processing means

## Claims

1. An image recognition device comprising:
imaging means for generating an image of a subject;
local area storage means for storing information relating to a local area set in an imaging screen of the imaging means; and
image data processing means for performing exposure control of the imaging means and image recognition processing, based on the image within the local area specified by the information stored in the local area storage means, of the image generated by the imaging means.

2. The image recognition device according to Claim 1, wherein
the image data processing means includes:
local area image extraction means for extracting the image within the local area specified by the information stored in the local area storage means, from the image generated by the imaging means;
exposure control means for performing the exposure control of the imaging means based on brightness of the extracted image within the local area; and
intruding object detection means for performing the image recognition processing for detecting an intruding object, on the extracted image within the local area.

3. The image recognition device according to Claim 1, wherein
the image data processing means includes:
local area image extraction means for extracting the image within the local area specified by the information stored in the local area storage means as a first image, and extracting the image within an area defined by expanding the local area specified by the information stored in the local area storage means, by a certain amount or a certain ratio, as a second image, from the image generated by the imaging means;
exposure control means for performing the exposure control of the imaging means based on brightness of the extracted second image; and
intruding object detection means for performing the image recognition processing for detecting an intruding object on the extracted first image.

4. The image recognition device according to Claim 1, wherein
the local area storage means stores information relating to a plurality of the local areas, and
the image data processing means divides, in a time axis direction, a plurality of the images generated by the imaging means into a plurality of groups which correspond to the respective local areas on a one-to-one basis, and for each of the groups, performs the exposure control of the imaging means and detection of an intruding object based on the image within the local area corresponding to each of the groups.

5. The image recognition device according to Claim 4, wherein
the image data processing means includes:
group selection means for sequentially selecting a group to be processed, from among the plurality of the groups;
local area image extraction means for extracting the image within the local area corresponding to the selected group, from the image generated by the imaging means;
exposure control means for generating an exposure control signal based on brightness of the extracted image within the local area, and with use of the generated exposure control signal, controlling exposure of the imaging means when an image of the selected group is captured next time; and
intruding object detection means for performing the image recognition processing for detecting an intruding object, on the extracted image within the local area.

6. The image recognition device according to any of Claims 1 to 5, further comprising communication means for transmitting the image generated by the imaging means to a management device over a network, receiving information specifying the local area from the management device over the network, and storing the information in the local area storage means.

7. An image recognition method implemented by an image recognition device including imaging means, local area storage means for storing information relating to a local area set in an imaging screen of the imaging means, and image data processing means, the method comprising:
by the imaging means, generating an image of a subject, and
by the image data processing means, performing exposure control of the imaging means and image recognition processing, based on the image within the local area specified by the information stored in the local area storage means, of the image generated by the imaging means.

8. The image recognition method according to Claim 7, wherein
the performing the exposure control and the image recognition processing includes, by the image data processing means:
extracting the image within the local area specified by the information stored in the local area storage means, from the image generated by the imaging means;
performing the exposure control of the imaging means based on brightness of the extracted image within the local area; and
performing the image recognition processing for detecting an intruding object, on the extracted image within the local area.

9. The image recognition method according to Claim 7, wherein
the performing the exposure control and the image recognition processing includes, by the image data processing means:
extracting the image within the local area specified by the information stored in the local area storage means as a first image, and extracting the image within an area defined by expanding the local area specified by the information stored in the local area storage means, by a certain amount or a certain ratio, as a second image, from the image generated by the imaging means;
performing the exposure control of the imaging means based on brightness of the extracted second image; and
performing the image recognition processing for detecting an intruding object on the extracted first image.

10. The image recognition method according to Claim 7, wherein
the local area storage means stores information relating to a plurality of the local areas, and
the performing the exposure control and the image recognition processing includes,
by the image data processing means, dividing, in a time axis direction, a plurality of the images generated by the imaging means into a plurality of groups which correspond to the respective local areas on a one-to-one basis, and for each of the groups, performing the exposure control of the imaging means and detection of an intruding object based on the image within the local area corresponding to each of the groups.

11. The image recognition method according to Claim 10, wherein
the performing the exposure control and the detection of an intruding object includes, by the image data processing means:
sequentially selecting a group to be processed, from among the plurality of the groups;
extracting the image within the local area corresponding to the selected group, from the image generated by the imaging means;
generating an exposure control signal based on brightness of the extracted image within the local area, and with use of the generated exposure control signal, controlling exposure of the imaging means when an image of the selected group is captured next time; and
performing the image recognition processing for detecting an intruding object on the extracted image within the local area.

12. The image recognition method according to any of Claims 7 to 11, further comprising
transmitting the image generated by the imaging means to a management device over a network, receiving information specifying the local area from the management device over the network, and storing the information in the local area storage means.

13. A program for causing a computer to function as, the computer being connected with imaging means for generating an image of a subject and including a memory for storing information relating to a local area set in an imaging screen of the imaging means,
image data processing means for performing exposure control of the imaging means and image recognition processing, based on the image within the local area specified by the information stored in the memory, of the image generated by the imaging means.
